# EUROPEAN PATENT APPLICATION

(11) **EP 3 744 533 A1**
(43) Date of publication of application: **02.12.2020**
(21) Application number: 20020221.6
(22) Date of filing: 14.05.2020
(51) Int. Cl.: B44B 5/00, B44B 5/02

(54) **EQUIPMENT FOR PRESSING SHAPED EMBOSSMENTS, ESPECIALLY IN A MULTI-LAYER FOIL**

(30) Priority: 28.05.2019 SK 500282019
(71) Applicant: Manz Slovakia, s.r.o., 915 01 Nove Mesto nad Vahom (SK)
(72) Inventor: Lauro, Lubos, 913 04 Chocholna-Velcice (SK)
(74) Representative: Andera, Jiri

(57) **Abstract**

The equipment for pressing of shaped embossments, especially in the multi-layer foil (14) comprising a base plate (1) and a thrust plate (2), wherein at least one of the plates (1, 2) is connected to the main drive (5) for relative movement of the plates (1, 2) towards each other. The foil (14) is fastened between the plates (1, 2). The thrust plate (2) comprises at least one recess (8) in the surface adjacent to the base plate (1) and the base plate (1) comprises at least one opening opposite the recess (8) wherein the sliding punch (4) is installed. The punch (4) is connected to the pressing drive (6) which protrudes the punch (4) out of the base plate (1) to the recess (8) in the thrust plate (2). In this way, a embossment in the foil (14) fastened between the plates (1, 2) is created. The thrust between the punch (4) and the thrust plate (2) to create a embossment is provided by at least one membrane (7) which is arranged in the thrust plate (2) and connected to the source of pressure medium whose pressure can be set by means of the pressure controller (9).

## Description

### Technical Field

The invention concerns the equipment for pressing of shaped embossments, especially in a multi-layer foil comprising an aluminium layer, for creating required foil shapes.

### Prior art

Forming multi-layer foils, e.g. comprising plastic - aluminium - plastic layers, to the required shapes is usually carried out using pressing equipment, wherein the foil is fastened between two thrust plates. Punches protrude from one plate through the fastened foil to the recess in the other plate. The punches inserted in the recess form the foil to the required shape, creating an embossment. The embossment is formed by means of plastic deformation of the foil aluminium layer, wherein it is important to prevent too much thinning of the aluminium layer. The controlled process of foil forming is ensured by fastening the foil between thrust plates of the pressing equipment and by setting the proper thrust between the plates.

The previously known and used solutions of pressing equipment use a main drive, e.g. a pneumatic or servo drive, to create the total thrust between the thrust plates. Furthermore, pressing dies with integrated tool springs are installed in the thrust plates, wherein the type and position of tool springs ensure the required thrust between the plates in individual zones of the pressing die.

A disadvantage of this design is that difficult assembly modifications and a change of the design layout of the pressing equipment are required to change the shape of the embossment. It is necessary to change the thrust plates with required embossments and adjust the arrangement of main drive parts with regard to the position of the embossments. Another disadvantage is that when it is necessary to change or set the thrust in individual zones of the pressing die between the thrust plates, it is necessary to change the characteristics of the springs. This means time and technically exigent replacement of the springs. The existing design of the pressing equipment also makes forming of two embossments simultaneously just next to each other on one foil much more difficult.

The goal of the invention is to design pressing equipment which will provide flexible and easy setting of the thrust between thrust plates and a flexible change of the produced embossment shape.

### Disclosure of Invention

The aforementioned goal is achieved by equipment for pressing of shaped embossments, in particular in a multi-layer foil, comprising a base plate and a thrust plate, wherein at least one of the plates is connected to the main drive for the relative plate shift towards each other, for fastening the foil between the plates, wherein the thrust plate comprises at least one recess on the surface adjacent to the base plate and the base plate comprises at least one opening opposite to the recess, wherein a sliding punch is installed, connected to the pressing drive to protrude the punch form the base plate to the recess in the thrust plate to create an embossment, wherein in the embossment area there are flexible elements arranged to form thrust between the punch and the thrust plate, according to the invention characterised in that the flexible elements include at least one membrane, installed in the thrust plate and connected to the pressure medium source, whose pressure can be set by means of a pressure controller.

An advantage of the equipment for pressing of shaped embossment, in particular in a multi-layer foil, according to the invention is that the change of thrust between the punch and the thrust plate is carried out by a change of the membrane pressure setting by means of the pressure medium without a need for construction modifications and assembling and disassembling the equipment. Changing the pressure is fast and precise. Membranes allow for an easy change of their position within the equipment for pressing of shaped embossments.

According to a preferred embodiment, the pressing equipment comprises several membranes whose shapes and dimensions are different.

An advantage of this embodiment is that it allows creating embossments of various shapes while preventing too much thinning of the aluminium layer and its further undesirable deformation.

According to a preferred embodiment, the membranes of the pressing equipment are also arranged outside the area of the embossment.

An advantage of this embodiment is prevention of undesirable rolling up of the foil in foil corners.

According to a preferred embodiment, each membrane of the pressing equipment has its own pressure controller.

An advantage of this embodiment is an independent setting of the thrust between the punch and the thrust plate in the area of each membrane, and thus achieving an optimum thrust to create the required embossment.

According to a preferred embodiment, the pressure medium connected to the membranes of the pressing equipment is of the hydraulic or pneumatic types.

An advantage of this embodiment is a flexible and fast change of the medium pressure in a large range of pressures.

According to a preferred embodiment, the pressing equipment comprises a base load-bearing plate and a base contact plate, detachable from the base load-bearing plate, and the thrust plate comprises a thrust load-bearing plate and a thrust contact plate, detachable from the thrust load-bearing plate, wherein a recess is arranged in the thrust contact plate and an opening for the sliding punch is arranged in the base load-bearing plate and contact plate.

An advantage of this embodiment is an easier change of the embossment shape as far as assembly and time demands are concerned, wherein to change the shape of embossments it is necessary to replace less construction parts of the equipment, i.e. the base contact plate and the thrust contact plate, and to arrange positions of the membranes.

According to a preferred embodiment, the surfaces of the base and thrust contact plates for fastening the foil of the pressing equipment have a highly polished surface.

An advantage of this embodiment is that highly efficient flow of material is provided and the occurrence of wrinkles in the corners of embossments is prevented.

According to a preferred embodiment, the pressing drive of the pressing equipment is a servo drive.

An advantage of this embodiment is a high repeatable precision of the punch position during foil pressing.

### Brief Description of Drawings

Equipment for pressing of shaped embossments, especially in a multi-layer foil, according to the invention will be described in detail in examples of specific embodiments, schematically shown in the figures attached.
Figure 1 shows a cross-section view of the arrangement of individual parts of the equipment to create two embossments at one time.
Figure 2 shows a schematic view of coupling of the drives and the pressure controller to the pressing equipment.
Figure 3 shows an example of the arrangement and types of membranes used for two rectangular embossments.
Figure 4 shows an example of the arrangement and types of membranes used for one oval-shaped embossment.
Figure 5 shows an example of the arrangement and types of membranes used for one rectangular embossment.

### Description of preferred embodiments

The equipment for pressing of shaped embossments is used especially for multi-layer foils, wherein one foil layer is made of aluminium. A embossment is created by means of plastic deformation of the aluminium layer. The equipment for pressing of shaped embossments can also be used for creating embossments in other materials having similar properties of plastic deformation as an aluminium layer.

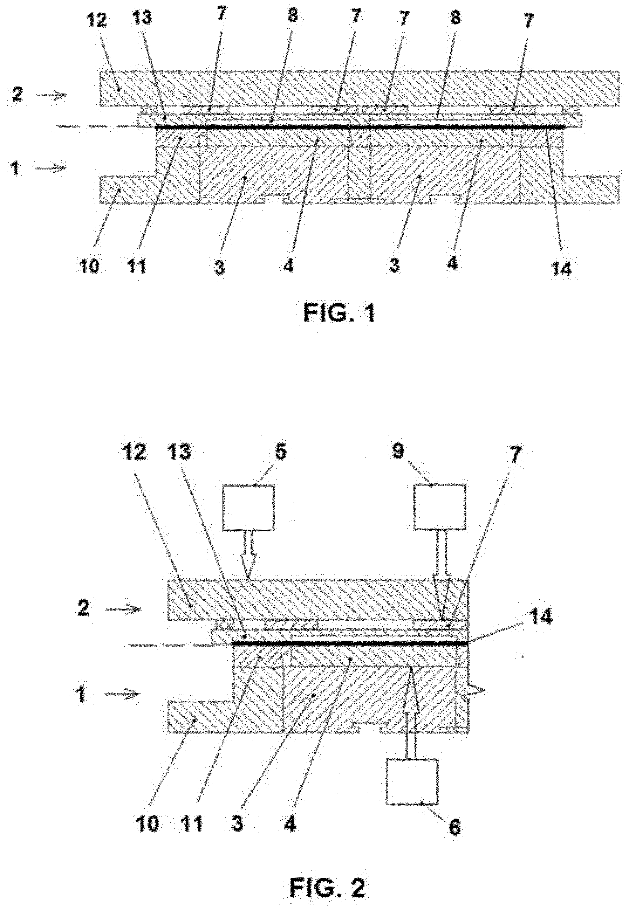

The equipment for pressing of shaped embossments, especially in the multi-layer foil 14 according to Figure 1 comprises a base plate 1 and a thrust plate 2. The base plate 1 is fixed. The thrust plate 2 is movable and connected to the main drive 5 (see Fig. 2) for the relative shift towards the base plate 1. The approximation of the plates 1, 2 fastens the pressed foil 14 between the plates 1, 2. The base plate 1 comprises a base load-bearing plate 10 and a base contact plate 11, detachable from the base load-bearing plate 10. The thrust plate 2 comprises a thrust load-bearing plate 12 and a thrust contact plate 13, detachable from the thrust load-bearing plate 12. The thrust plate 2 further comprises two recesses 8 arranged next to each other in the thrust contact plate 13 on the surface adjacent to the base contact plate 11. The recess 8 defines the embossment shape. The base plate 1 comprises two openings, each of which is placed opposite to one recess 8. In each opening of the base plate 1 there is a guiding way 3 of the punch 4 and a sliding punch 4. The shape of the punch 4 (its contact part with the recess 8) is defined according to the shape of the recess 8 into which it fits. The sliding punch 4 is connected to the pressing drive 6 (see Fig. 2) to protrude the punch 4 out of the base plate 1 through the fastened foil 14 into the recess 8 in the thrust contact plate 13, thus creating a embossment in the foil 14. The pressing drive 6 (see Fig. 2) of the punches 4 is an electric drive with a repeatable positioning precision of ±50µm. Surfaces of the contact plates 11, 13 for fastening the foil 14 have a high-polished surface. This ensures as highly efficient flow of material as possible and prevents the occurrence of wrinkles in the corners of the embossment. One of the most important requirements for embossments is to prevent the formation of wrinkles in the corners of the embossment. Membranes 7 are installed to achieve the required thrust between the punch 4 and the thrust contact plate 13, and thereby the required embossment quality. The membranes 7 are arranged around embossment edges between the thrust load-bearing plate 12 and the thrust contact plate 13. The membrane 7 comprises a polyurethane membrane fastened on the opened side of the pressure cylinder having an aluminium peripheral wall and a bottom. A source of pneumatic pressure medium is connected to the cylinder. The pressure of the medium can be quickly and accurately set by means of pressure controllers 9 (see Fig. 2) independently for each membrane. The thrust of the membranes can be controlled within the range of 0-600 kPa.

Fig. 2 shows couplings of the drives 5, 6 and the pressure controller 9 to the equipment for pressing of shaped embossments. The main drive 5 moves the thrust plate 2. The pressing drive 6, which is a servo motor, moves the punches 4. The source of pressure medium for creating the thrust of membranes 7 is pneumatic and its pressure is controlled by an electronic pressure controller 9.

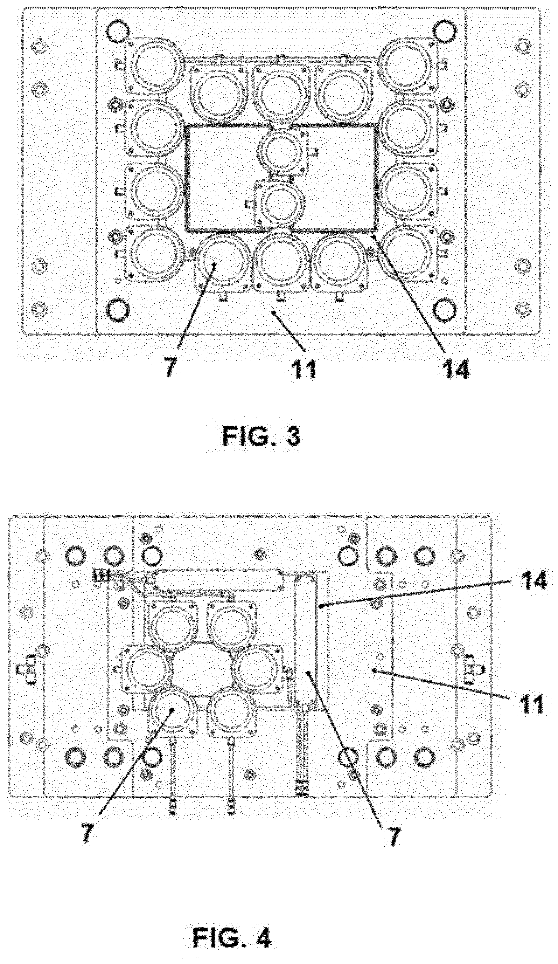

Figures 3 through 5 show the arrangement of the membranes 7 for various shapes, sizes, numbers and positions of embossments, which defines the arrangement, number and shape of the membranes 7. The minimum theoretical number of membranes 7 is 1 piece.

Figure 3 shows the arrangement of the membranes 7 for the creation of two rectangular embossments next to each other. The embodiment in Fig. 3 uses one shape of the membranes 7. Because the biggest re-forming of the foil 14 with regard to foil 14 thinning and creasing occurs in the corners of the embossment, the membranes 7 are primarily located in the corners of the embossment (the highest pressure acts there) and on the edges of the embossment (there is a lower-order pressure than in the corners).

Figure 4 shows the arrangement of the membranes 7 for one oval-shaped embossment. In oval-shaped embossments, the biggest re-forming of the foil 14 occurs on the edge, therefore the membranes 7 are located evenly around the edge of the embossment. The membranes 7 around the edge of the embossment are of an identical shape. A different shape of the membranes 7 is used for the membranes 7 which are situated outside the embossments and which prevent the undesirable rolling-up of the foil 14 in the corners of the foil 14.

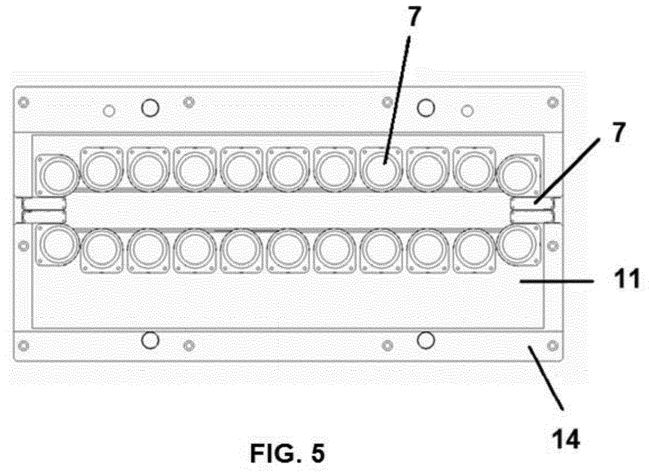

Figure 5 shows the arrangement of the membranes 7 for a rectangular embossment. Two shapes of the membranes 7 are used. One shape is installed on longer sides of the rectangular embossment and the other shape on the shorter sides of the rectangular embossment.

### List of reference numbers

- 1: base plate
- 2: thrust plate
- 3: guiding way of the punch
- 4: punch
- 5: main drive
- 6: pressing drive
- 7: membrane
- 8: recess
- 9: pressure controller
- 10: base load-bearing plate
- 11: base contact plate
- 12: thrust load-bearing plate
- 13: thrust contact plate
- 14: foil

## Claims

1. An equipment for pressing of shaped embossments, in particular in a multi-layer foil (14), comprising a base plate (1) and a thrust plate (2) for fastening the pressed foil (4) between the plates (1, 2), wherein at least one of the plates (1, 2) is connected to a main drive (5) for the relative plates (1, 2) shift towards each other, wherein the thrust plate (2) comprises at least one recess (8) on a surface adjacent to the base plate (1) and the base plate (1) comprises at least one opening opposite to the recess (8), wherein a sliding punch (4) is arranged in the opening, connected to a pressing drive (6) to protrude the punch (4) from the base plate (1) into the recess (8) in the thrust plate (2) to create an embossment, and wherein in the embossment area there are flexible elements arranged to form thrust between the punch (4) and the thrust plate (2), **characterised in that** the flexible elements include at least one membrane (7), arranged in the thrust plate (2) and connected to the pressure medium source, whose pressure can be set by means of a pressure controller (9).

2. The equipment for pressing according to claim 1, **characterised in that** it comprises several membranes (7) whose shapes and dimensions are different.

3. The equipment for pressing according to claim 1 or 2, **characterised in that** the membranes (7) are also arranged outside the embossment area.

4. The equipment for pressing according to any of claims 1 to 3, **characterised in that** every membrane (7) has its own pressure controller (9).

5. The equipment for pressing according to any of claims 1 to 4, **characterised in that** the pressure medium connected to the membranes (7) is hydraulic or pneumatic.

6. The equipment for pressing according to any of claims 1 to 5, **characterised in that** the base plate (1) comprises a base load-bearing plate (10) and a base contact plate (11), detachable from the base load-bearing plate (10), and the thrust plate (2) comprises a thrust load-bearing plate (12) and a thrust contact plate (13), detachable from the thrust load-bearing plate (12), wherein a recess (8) is arranged in the thrust contact plate (13) and an opening for the sliding punch (4) is arranged in the plates (10, 11).

7. The equipment for pressing according to claim 6, **characterised in that** the surfaces of the contact plates (11, 13) for fastening the foil (14) have a high-polished surface.

8. The equipment for pressing according to any of claims 1 to 7, **characterised in that** the pressing drive (6) is a servo motor.
